# EUROPEAN PATENT APPLICATION

(11) **EP 3 020 911 A1**
(43) Date of publication of application: **18.05.2016**
(21) Application number: 15188981.3
(22) Date of filing: 08.10.2015
(51) Int. Cl.: E21B 17/06, F16D 43/202

(54) **TORQUE LIMITING DEVICE AND METHOD OF CONTROLLING TORQUE**

(30) Priority: 22.10.2014 GB 201418749
(71) Applicant: Odfjell Partners Invest Ltd, 4098 Tananger (NO)
(72) Inventor: Leiper, Simon, P.O. 17354 Dubai (AE)
(74) Representative: Flaherty, Annette Esther

(57) **Abstract**

A torque limiting device (60) is connectable between sections of a rotatable tubular device. The torque limiting device (60) includes first and second tubular elements (1, 19), a driven element (20), a drive element (9) and a biasing member (4). The tubular elements (1, 19) are connectable between adjacent sections of the tubular device. The drive element (9) and the driven element (20) are in rotational communication with the first and second tubular elements (1, 19). The drive element (9) and driven element (20) can be engaged with, disengaged from and re-engaged with each other. Upon relative rotation of the drive element (9) and the driven element (20) a longitudinal force is imparted in the direction of disengagement.

The biasing member (4) applies a biasing force (BF) in the direction of engagement. The biasing force (BF) is configurable such that disengagement occurs when the longitudinal force exceeds a predetermined biasing force (BF).

## Description

### FIELD OF INVENTION

The present invention relates to a fail-safe device operable to prevent twist-off in, for example, a drilling operation in a downhole application. In particular, the present invention relates to a torque limiting device for use with a rotational tubular device.

### BACKGROUND TO THE INVENTION

Typically, oil wells are formed by drilling a bore hole using a bit and bottom-hole assembly, which is progressively lowered into the wellbore on a drill pipe, commonly referred to as a drill string. As the well is deepened, it is necessary to clad the well with steel casing which is lowered and cemented into the wellbore. This forms a series of overlapping casings of progressively reducing diameters. As such the size of drill pipe used to drill each subsequent section reduces to match the diameter of the casing. It will be appreciated that as the cross sectional size of the pipe reduces there will also be a reduction in strength of the pipe, the most significant of which being torque and tensile strength.

As a well deepens it is often desirable to drill at an increased angle to reach oil reservoirs which may be some lateral distance from the original position of the well. Such drilling is sometimes referred to as Extended Reach Drilling, Horizontal Drilling or High Angle Drilling. Such drilling methods cause the rotational torque to increase, in particular torque increases as the depth and reach of the well increases.

During drilling operations it is known that the application of excessive torque can lead to failure of the drill string. Such failures are commonly referred to as twist-off. For example, in the event that the lower drill string becomes jammed the effective torque applied to the upper drill string continues to increase because the lower part is stationary. The upper drill string continues to rotate and therefore imparts a twisting action on the lower drill string until the point of failure is reached and twist-off occurs when the upper and lower parts of the drill string separate. Such failures can result in a costly remedial operation, known as fishing.

To prevent twist-off, it is common that drilling rigs include a torque limiting device installed at a surface located drive mechanism on the rig.

Typically, a torque limiting device is operable to automatically stop drilling when a pre-determined torque level is exceeded. For example if the drill bit becomes stuck the torque will increase from the bit upwards until an excess torque is detected at surface, whereupon the surface-located torque limiter will trip the motor driving the string.

A liner is often present in the wellbore and as such the drill string consists of an upper section of a larger diameter and a lower section of a smaller diameter, for example in the case of an Extended Reach well, the torque required to turn the upper string at surface may exceed the torsional strength of the lower string. As such rotation of the string is avoided or restricted. Rotation of the string is a critical component of efficient hole cleaning, as it induces turbulent flow and reintroduces settled drilling debris into the flow path of the drilling fluid to facilitate it being circulated to surface. Therefore, having a torque limiting device located at surface in such an application may be problematic because the failure of the lower string may occur prior to the torque limiter identifying a problem.

US patents, US 8 616 292 and US 6 497 295 each provide examples of torque limiting devices.

It is desirable to provide an improved torque limiting device.

### SUMMARY OF INVENTION

According to a first aspect of the present invention there is provided a torque limiting device connectable between sections of a rotatable tubular; the torque limiting device comprising:
a first tubular element and a second tubular element, wherein the first and second tubular elements are connectable to and between respective first and second adjacent sections of the tubular;
a driven element and a drive element each in rotational communication with the first and second tubular elements respectively, wherein the driven element and the drive element are engageable with, disengageable from and re-engageable with each other and wherein upon relative rotation, when engaged the a longitudinal force is imparted in the direction of disengagement, the tubular being axially secured and rotationally dependent when the driven element and the drive element are engaged; and
a biasing member operable to apply a biasing force to one of the driven element and the drive element in the direction of engagement, wherein the biasing force is configurable to be greater than the longitudinal force imparted by rotation of the tubular when the driven element and drive element are engaged and wherein disengagement of the driven element and the drive element is effected when the longitudinal force exceeds a predetermined biasing force.

An example of when the longitudinal force may exceed the biasing force is in the event that the rotation of the driven element stops, for example in a drilling operation, where a drill bit associated with the driven element gets stuck or jammed. As such in a device according to the present invention the longitudinal force imparted by continued rotation of the drive element will exceed the biasing force and as such the driven element and the drive element will disengage.

The driven element and the drive element may each comprise a complementary mating surface. The complementary mating surfaces are operable to engage, disengage and reengage the drive element and the driven element relative to each other.

The complementary mating surfaces of each of the driven element and the drive element may comprise a toothed profile comprising a plurality of teeth arranged to mesh when engaged. Each tooth may comprise an asymmetric form including two faces where one face is angled at a steeper angle than the other face. The teeth may comprise at least one sloping face. The sloping face may comprise an angle of incline of between 30 and 60 degrees. The sloping face may define an angle of between 35 degrees and 65 degrees. The sloping face may define an angle of between 40 and 50 degrees.

The torque control device may further comprise a bearing assembly associated with the biaising element and operable to control movement of the driven element or the drive element between engagement and disengagement.

The bearing assembly may comprise a first ball retainer and a second ball retainer, wherein the first ball retainer and the second ball retainer each comprise complementary facing wedged profiles which define a substantially V-shaped groove configured to receive a ball bearing, wherein the biasing element is operable to apply the biasing force to one of the first retainer or the second retainer to retain the ball.

The drive element may comprise a shoulder section and a tapered flank disposed on one end, wherein the ball is configured to rest on the shouldered section when the drive element and the driven element are engaged and disengaged and wherein the ball is configured to ride over the tapered flank in response to loading via the bearing assembly to move from engaged to disengaged and from disengaged to engaged.

The bearing assembly may further comprise a stop arranged to limit travel of the drive element during movement from engaged to disengaged.

The torque limiting device may further comprise an adjuster associated with the biasing element, wherein the adjuster is operable to adjust the biasing force applied by the biasing element. The adjuster may be provided by a threaded fastener comprising a shoulder, which, in use, is in contact with the biasing element, wherein adjustment of the biasing force is by clockwise or counterclockwise rotation of the threaded fastener.

The baising element may comprise a resilient element. The resilient element may comprise one or more springs, for example a gas spring, compression spring, crest-to-crest wave spring, single turn wave spring, disc spring etc. The spring may comprise a plurality of coned disc springs, also known as Bellville^{™} washers, arranged in a stack.

Advantageously, a torque limiting device according to the first aspect of the invention may be installed at any point in a drill string. In particular, a notable application will be at the interface between a larger and smaller diameter string of drill pipe as described above. For example, should the smaller diameter drill string become stuck, as the torque of the string increases, the torque limiting device may be operable to disengage the driven element and the drive element thereby allowing the upper string to rotate independently of the lower string, and thereby preventing twist-off.

Accordingly, the torque limiting device may comprise the first tubular element being connectable to an upper section of a tubular device, and the second tubular element being connectable to a lower section of a tubular device; wherein the first tubular element comprises a connector for connection to the upper section of the tubular device and an elongate shaft section, wherein the shaft section comprises a threaded section to which is secured an end cap from which, in use, the lower section of the tubular device is suspended, the drive element and the driven element being mounted relative to the shaft section, wherein the shaft section includes a splined outer profile which engages with a corresponding splined profile on the driven element and a locking nut to retain the driven element longitudinally, the drive element being rotationally free relative to the shaft section and being rotationally dependent on an annular sleeve comprising a splined inner surface corresponding with a splined outer surface of the drive element, wherein the annular sleeve is rotational relative to a further bearing assembly comprising a stator and rotor section such that when the driven element and the drive element are engaged the upper and lower sections of the tubular device are rotationally dependent and when the driven element and the drive element are disengaged the upper section is rotatable independent of the lower section.

The further bearing assembly may comprise for example polycrystalline diamond bearings, ball bearings, ceramic bearings, plain bronze bearings, etc.

### BRIEF DESCRIPTION OF THE DRAWINGS

Embodiments of the present invention are described below, by way of example only, with reference to the accompanying drawings, in which:
Figure 1 is a schematic representation of a torque limiting device according to an embodiment of the present invention;
Figure 2 is a schematic representation of engagement between a driven element and drive element of a torque limiting device according to an embodiment of the present invention;
Figure 3 is a schematic representation of partial dis-engagement of the driven element and drive element of a torque limiting device according to an embodiment of the present invention;
Figure 4 is a schematic representation of dis-engagement of the driven element and drive element of a torque limiting device according to an embodiment of the present invention;
Figure 5 is a schematic representation of engagement of the driven element and drive element of a torque limiting device according to an embodiment of the present invention;
Figure 5a is a schematic representation of a cross section about 5A-5A in figure 5;
Figure 6 is a schematic representation of partial dis-engagement/pre-release of the driven element and drive element of a torque limiting device according to an embodiment of the present invention;
Figure 7 is a schematic representation of dis-engagement of the driven element and drive element of a torque limiting device according to an embodiment of the present invention;
Figure 8 is a schematic representation of reset status of the driven element and drive element of a torque limiting device according to an embodiment of the present invention;
Figure 9 is a schematic representation of pre-engagement status of the driven element and drive element of a torque limiting device according to an embodiment of the present invention;
Figure 10 is a schematic representation of a system comprising a torque limiting device according to an embodiment of the present invention;
Figure 11 is a schematic representation of a system comprising a torque limiting device according to an embodiment of the present invention; and
Figure 12 is a schematic representation of a system comprising a torque limiting device according to an embodiment of the present invention.

### DESCRIPTION

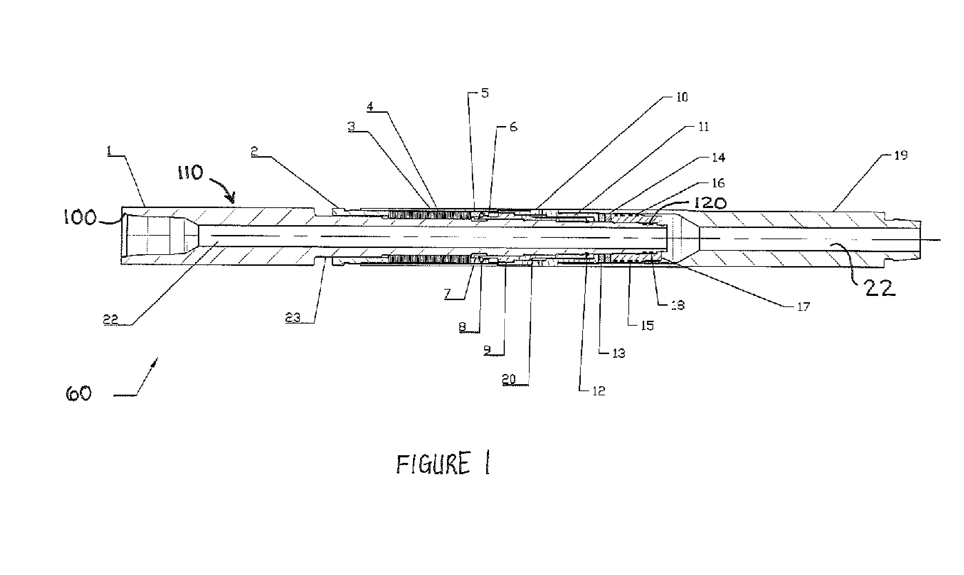

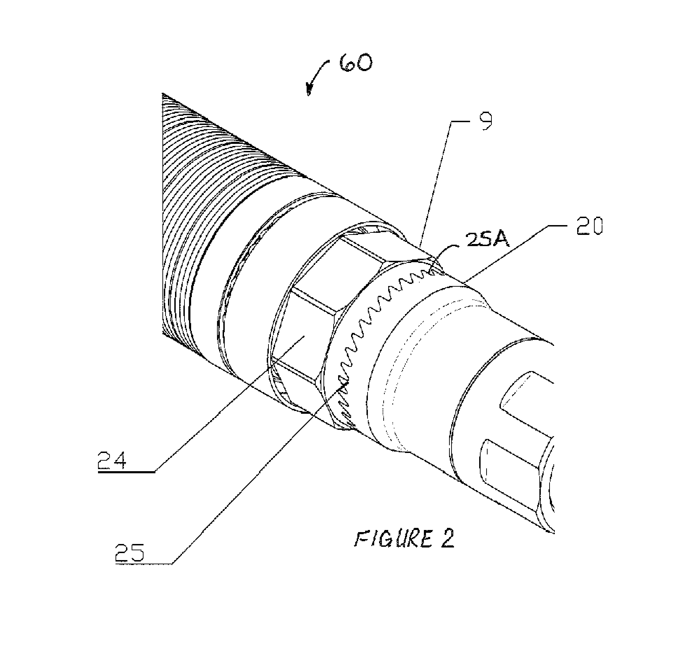

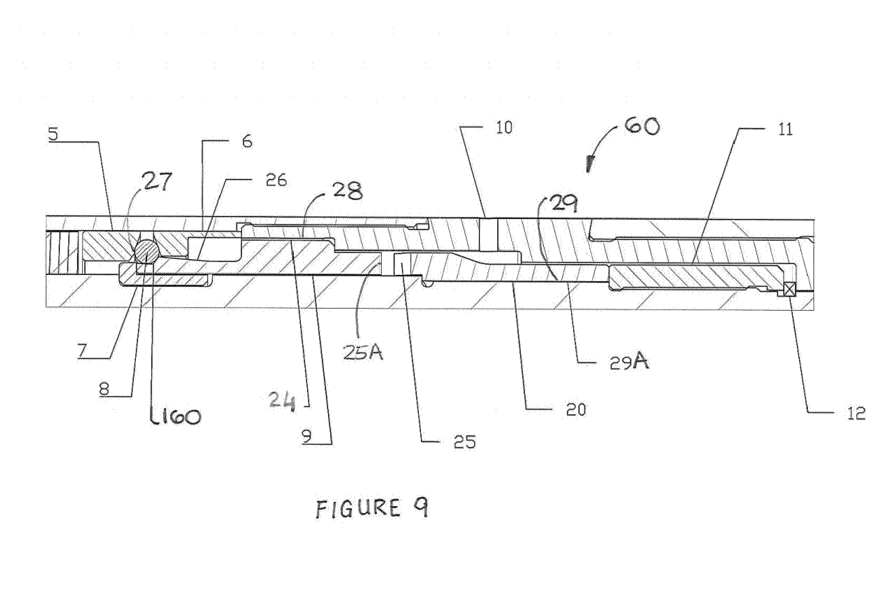

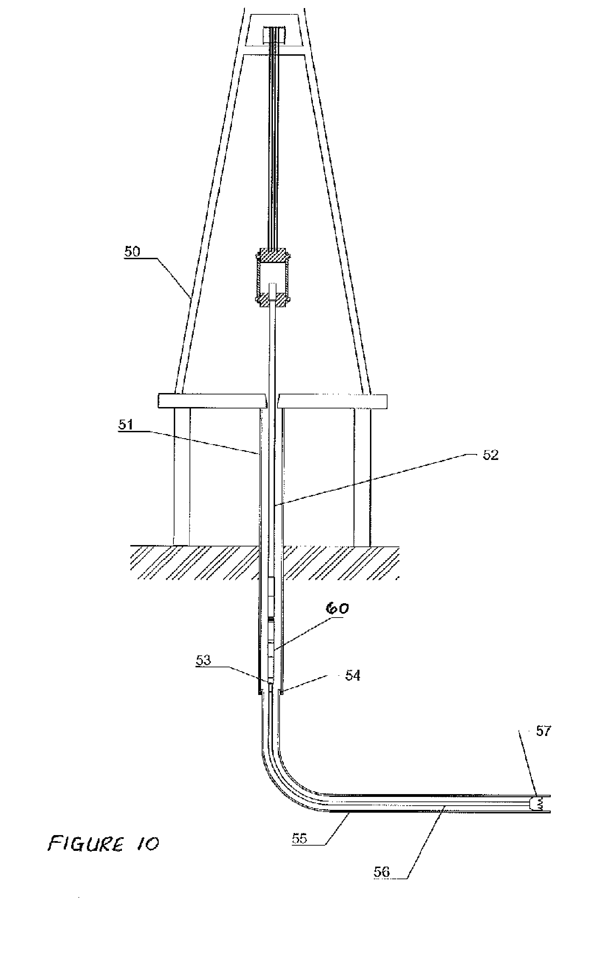

Figures 1 to 9, each illustrate a torque limiting device 60 according to an embodiment of the present invention. The torque limiting device 60 includes an upper mandrel 1 and a lower mandrel 19 which provide the axial connection of the torque limiting device 60 to a tubular device, for example, in a downhole application with a drill string 52 or a near surface or at surface application with a top drive 58 or casing running tool 64, etc. (see figures 10 to 12).

The upper mandrel 1 comprises an axial through bore 22 and a threaded connector 100 for connecting the device 60 to an upper section of the tubular device and the lower mandrel 19 comprises an axial through bore 22 and a crossover or threaded connector to connect the device 60 to a lower section of the tubular device, thereby axially securing the torque limiting device 60 to the tubular device.

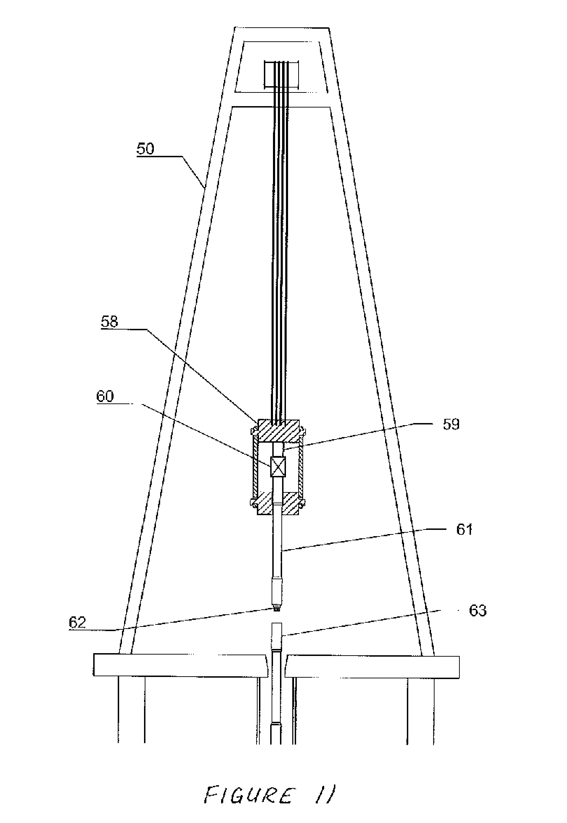

The upper mandrel 1 may be connected to the upper section of the tubular device, for example a drill string (see figures 10 and 11) via a rotary shouldered connection as typically used in oil well drilling.

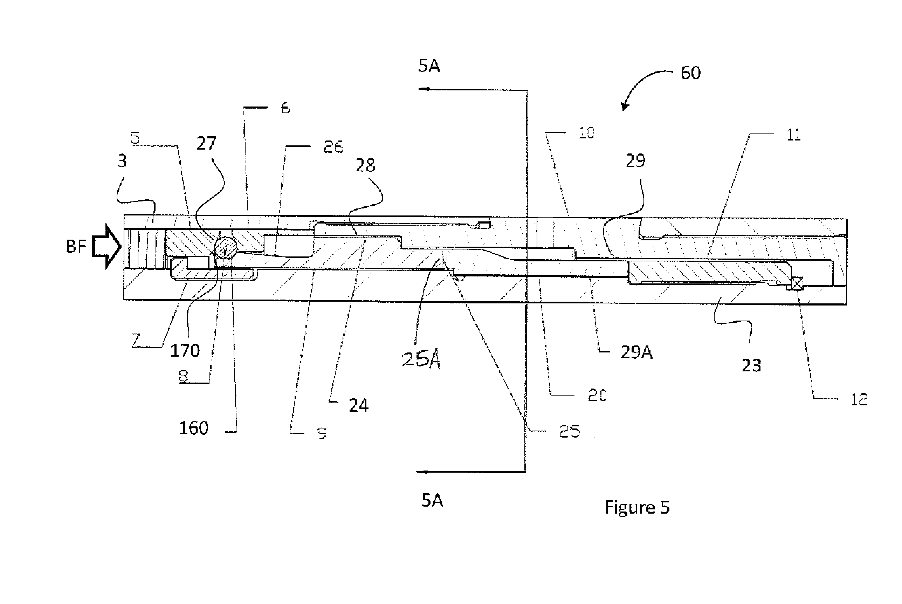

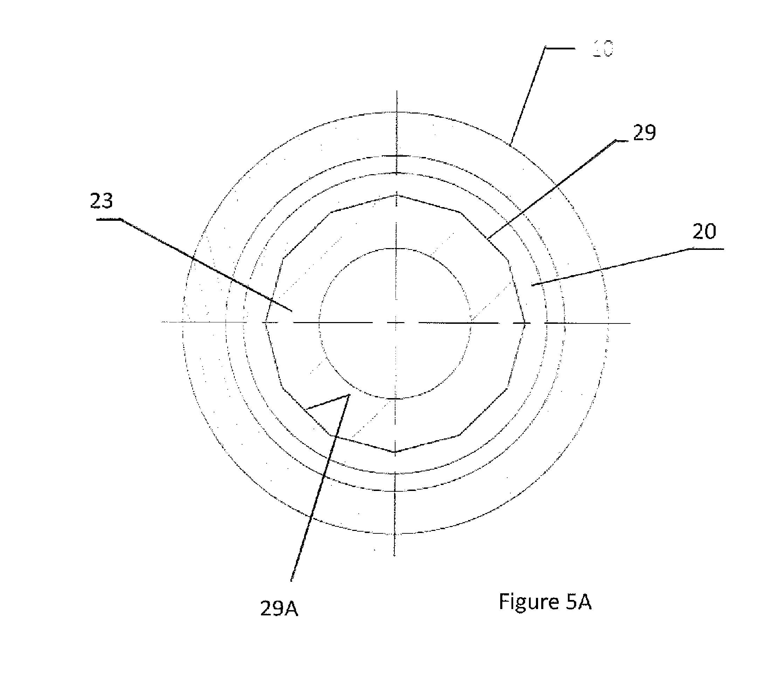

The upper mandrel 1 comprises a main body section 110, which includes the connector 100 and a shaft section 23. In the illustrated embodiment, the shaft section 23 is of reduced diameter compared with the body section 110. The shaft 23 includes an external splined profile 29A which corresponds with a splined profile 29 (see figure 5A) provided on the body of the torque limiting aspect of the device 60.

As illustrated in figure 1, the upper mandrel 1 comprises a threaded section 120 fitted with an end cap 17 and a seal 18 at the end of the shaft section 23.

In the illustrated embodiment several seals 15, 16, 18 are provided at the end cap 17 to form static and dynamic seals between the internal bore 22 and the wellbore (not illustrated) in which the device 60 is to be located.

The upper mandrel 1 is provided on the drive side of the torque limiting aspect of the device 60 and the lower mandrel 19 is provided on the driven side of the torque limiting aspect of the device 60. The torque limiting aspect of the device 60 is described further below. In brief, the torque limiting aspect of the device 60 is provided by a drive element 9 and a driven element 20, which, in the illustrated example, each comprise a complementary toothed mating surface 25 arranged to mate/engage for rotation of the tubular device as a whole and are arranged to disengage by axial displacement of the drive element 9 from the driven element 20, when the torque generated in the system exceeds a predetermined maximum, for example when a lower section of the tubular device becomes jammed and the torque in the system increases due to the continued rotation of the upper section.

At the lower end of the device 60, in a position upwards of/adjacent to the end cap 17, the device 60 includes an upper bearing ring 13, (stator) and a lower bearing ring 14 (rotor). The relative arrangement of the stator 13 and the rotor 14 bearing rings is such that when the driven element 20 and the drive element 9 are disengaged the upper section of the tubular device can continue to rotate whilst the lower section of the tubular device remains stationary. The drive element 9 is annular and is configured to rotate relative to the shaft 23. An example of a suitable bearing is a poly crystalline diamond bearing, but it will be appreciated that alternative arrangements such as ball bearings, ceramic or other technologies are applicable.

Above the stator 13 and attached to the upper mandrel 1 is a locking nut 11, to retain the driven element 20 to the upper mandrel 1. In the illustrated example, the locking nut 11 is further retained by a snap ring 12.

Referring to figures 5 to 9, the driven element 20 is a tubular member that includes a splined internal surface 29 configured to engage with a corresponding splined surface 29A on the exterior of shaft section 23 of the upper mandrel 1 such that when the upper mandrel 1 rotates the driven element 20 also rotates. The driven element 20 includes a toothed profile at one end. The toothed profile includes a plurality of teeth 25. The drive element 9 comprises a complementary toothed profile such that when the teeth 25 of the driven element 20 and the teeth 25A of the drive element 9 are engaged the upper and lower sections of the tubular device are axially secured and rotationally dependent.

The drive element 9 is configured for rotation by locking engagement with an outer sleeve 10. The drive element 9 includes an external splined profile 24 which complements with a splined profile 28 on an internal surface of the outer sleeve 10. The drive element 9 is arranged to rotate relative to the shaft 23 and also to displace, under load, longitudinally in a direction away from the driven element 20. Longitudinal displacement of the drive element 9 is enabled and prevented by the action of a bearing assembly which acts under a biasing force BF to retain the drive element 9 in a desired position.

Figure 5 illustrates a partial cross section of figure 1 and illustrates the torque limiting device when the teeth 25, 25A of the driven element 20 and the drive element 9 are engaged; meaning that the upper section of the tubular and the lower section of the tubular are axially secured and rotationally dependent.

The bearing assembly comprises an upper retainer ring 5 and a lower retainer ring 6, between which is arranged a plurality of ball bearings 8. The lower retainer ring 6 abuts against the outer sleeve 10 and the upper retainer ring 5 abuts against a biasing element 4 which provides a biasing force BF to act against the upper retainer ring 5 to maintain contact between the driven element 20 and the drive element 9. In the illustrated example, a spring mechanism capable of delivering approximately 97-100kN (20,000 lb) spring force is provided. In the illustrated example the biasing force BF is provided by a stack of Bellville™ washers 4.

A spring housing 3 is provided by an annular sleeve, which defines a channel between the spring housing 3 and the shaft 23. At one end, the spring housing 3 is axially secured to the outer sleeve 10 and at the other end the spring housing 3 is axially secured to a nut 2 (see figure 1). The nut 2 provides control and adjustment of the biasing force BF. Therefore, the magnitude of biasing force BF can be adjusted or controlled by clockwise or anticlockwise rotation of the nut 2.

One face of each of the lower retainer ring 6 and the upper retainer ring 5 comprises a wedge shaped profile 170. As such when arranged adjacent to each other a substantially V-shaped groove 27 is defined between the lower retainer ring 6 and the upper retainer ring 5.

The bearings 8 are located within the V-shaped groove 27 and bound by the spring housing 3 and a shoulder 160 at the upper end of the drive element 9.

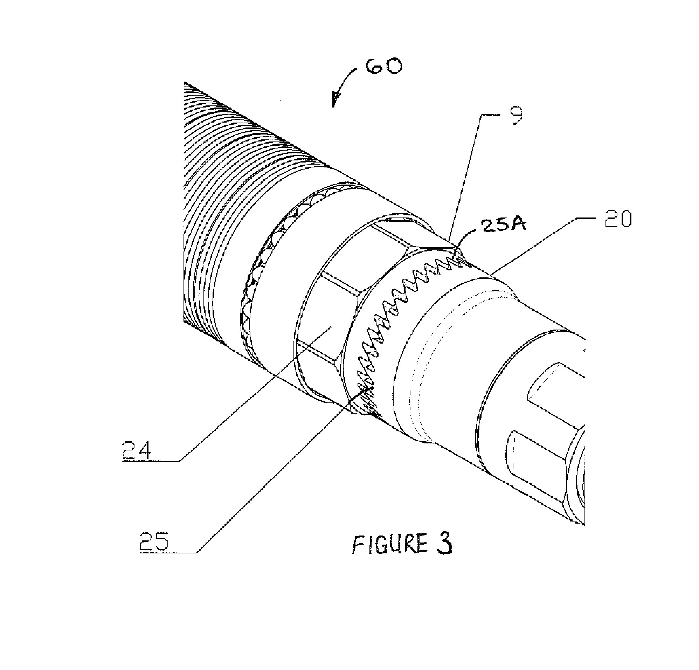

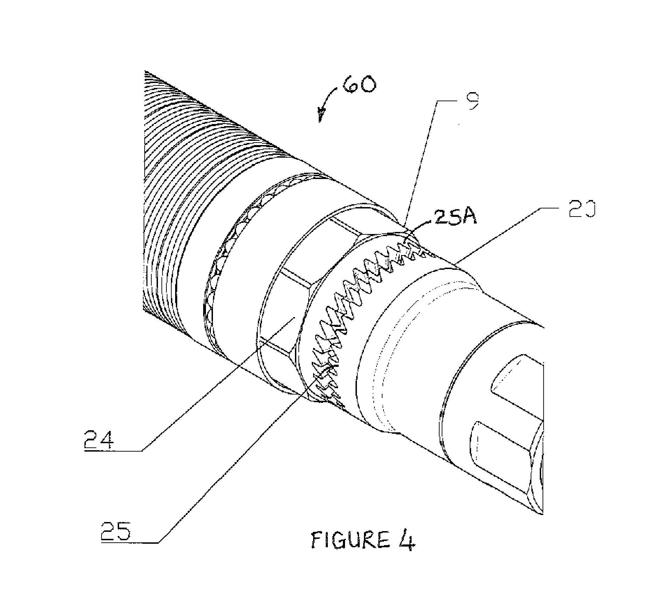

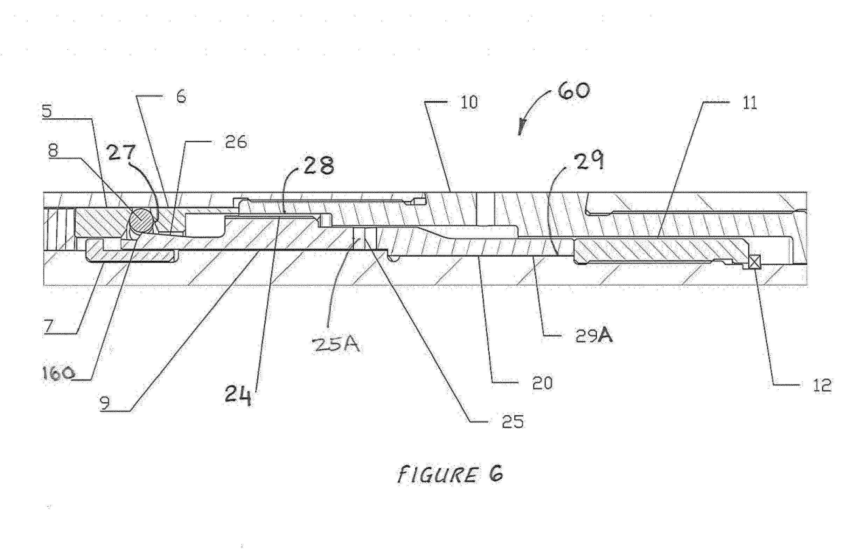

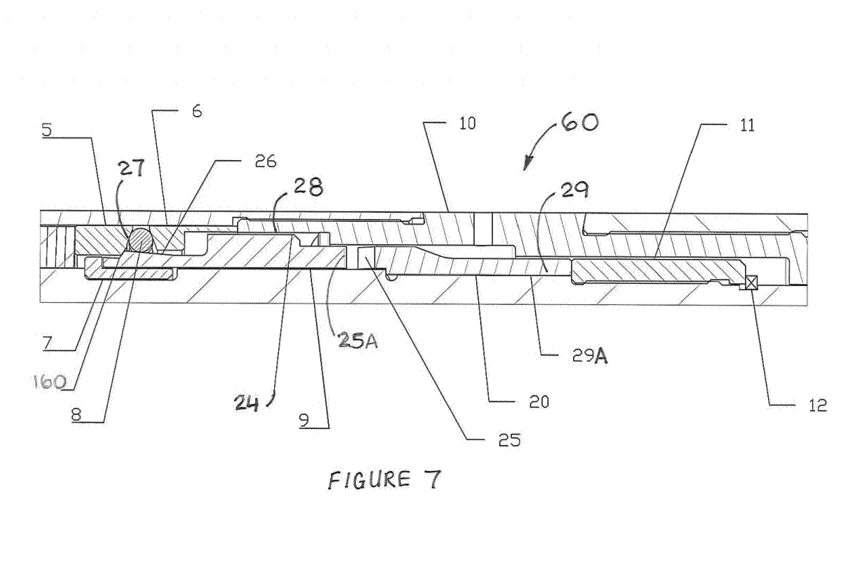

Figures 1, 2, and 5 represent the situation where the driven element 20 and the drive element 9 are fully engaged and therefore rotatably dependent. Figures 3 and 6 illustrate the situation where the longitudinal force generated on the drive nut 9 exceeds the biasing force BF and therefore the drive element 9 begins to displace longitudinally thereby disengaging from the driven element 20. Figures 4 and 7 illustrate the situation where the drive element 9 and the driven element 20 are disengaged and therefore are rotationally independent.

The transition from engaged to disengaged as illustrated in figures 1 to 7 occurs for example when a drill bit at the lower end of the tubular device stops rotating independent of the rotation of the upper end of the tubular.

The function of the bearing assembly determines the position of the drive element 9 and determines the engagement status.

When the drive element 9 and the driven element 20 are engaged and the system is rotatably dependent, the teeth 25, 25A are meshed. The teeth are angled, similar to a ratchet, such that continuous rotary motion occurs in one direction only, for example clockwise. The teeth 25, 25A are uniform and comprise a moderate slope on one face and a steeper slope on the other face, for example a moderate slope of 45 degrees and a steeper slope of 90 degrees. The configuration of the teeth 25, 25A on both the transmission element 20 and the drive element 9 is such that rotation generates a torque which generates a longitudinal force which tries to separate the drive element 9 from the transmission element 20. The rotation or torque generated longitudinal force can be used effectively to separate the drive element 9 from the transmission element 20 when, for example a drill bit stops rotating or becomes jammed independent of the rotation of the upper section of the downhole tubular.

The bearing assembly is configured to control the displacement of the drive element 9 relative to the transmission element 20 such that separation or disengagement occurs only when required, for example when a drill bit becomes jammed.

As illustrated in figures 5 to 9 the drive element 9 comprises a shoulder 160 at the upper end and a tapered flank 26. As is illustrated in Figure 5 the ball 8 rests on the shoulder 160 within the V-shaped groove 27 when the transmission element 20 and the drive element 9 are engaged. The spring force SF acts on the upper retainer ring 5 to maintain the position of the ball 8 in the groove 27 and therefore the longitudinal force generated in the drive element 9 is counteracted by the spring force SF.

Figure 6 illustrates the situation where the torque generated longitudinal force exceeds the spring force SF and as such the drive element 9 begins to move longitudinally towards the spring element 4 and away from the transmission element 20 where the teeth 25, 25A begin to disengage. The longitudinal movement of the drive element 9 pushes the ball 8 upwards over the edge of the shoulder 160 thereby shifting the upper retainer ring 5 upwards to compress the spring element towards the upper section of the downhole tubular. The action of separation continues until the teeth 25, 25A are separated as illustrated in figure 7 where the ball 8 comes to rest in the V-shaped groove 27 bounded by the tapered flank 26 of the drive element 9, the wedged faces 170 of the upper and lower retainer rings 5, 6 and the spring housing 3. The extent of travel of the drive element 9 is limited by a stop 7 provided in the illustrated example by a split ring.

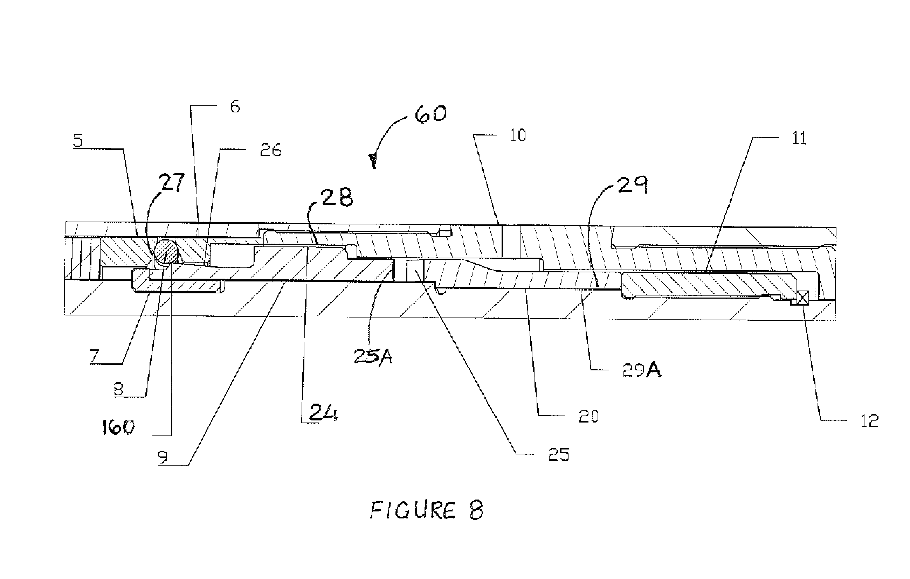

Figure 8 illustrates the situation where the transmission element 20 and the drive element 9 can be reengaged. Any rotation, for example rotation of the upper tubular section, is halted and a compressive force is applied, preferably from both ends. Typically, applying a compressive force from both ends is done by moving the downhole tubular, for example a drill string, downwards thereby applying a compressive force on the torque limiting device 60, wherein the upper mandrel 1 effectively moves downwards whilst the lower mandrel 19 and associated parts effectively move upwards. The lower retaining ring 6 pushes on the balls 8 to drive them upwards. This action causes the drive element 9 to move upwards also until the drive element 9 abuts the stop 7, at which point the ball 8 rides over the shoulder 160 of the drive element 9 to rest on the tapered flank 26. The movement will continue in compression until the ball 8 rests in the V-shaped groove 27 and on the shoulder 160. At this point the teeth 25, 25A are still disengaged. To reengage the teeth 25, 25A the tubular is subject to a tension load wherein the biasing force BF acts to return the drive element 9 to engage with the driven element 20. When reengaged the driven element 20 and the drive element 9 are rotationally dependent once more. Therefore, upper and lower sections of the tubular device are also rotationally dependent.

Figure 10 illustrates an example of the torque limiting device 60 being used in a downhole application. In the illustrated example, the torque limiting device 60 is being used as part of a drill string. A drilling rig 50 is illustrated from which the drill string suspends into an oil well. In the illustrated example the oil well is formed by a casing 51 into which is placed a liner 55, which is of smaller diameter than the casing 51. The torque limiting device 60 is lowered as part of the drill string 52 by the drilling rig 50 into the oil well on a drill pipe, which connects the drilling rig to a drill bit 57. The drill pipe comprises a tubular including an upper drill string 52 and a lower drill string 56. Notably, the torque limiting device 60, according to an embodiment of the present invention, is connected to the drill pipe remote from a surface or near-surface location at a transition point of larger to smaller diameter. A connector connects the upper drill string 52 to the upper mandrel and a crossover connector 53 connects the lower drill string near the top 54 of the liner 55. As discussed above the lower drill string 56 is typically of smaller diameter and of lower strength than the upper drill string 52.

The upper and lower drill strings 52, 56 are rotationally dependent when the drive element and driven element of the torque limiting device 60 are engaged, as described above with reference to figures 1, 2 and 5. The drill string 52, 56 rotates the bit 57 in order to remove material to form a wellbore. If the bit 57 sticks, torque in the system increases due to the continued rotation of the drill string above the bit 57. The increased torque generates a longitudinal force in the torque limiting device 60 and when the torque generated force exceeds the biasing force BF the torque limiting device 60 will operate as described above with reference to figures 3 and 6 to separate the drive element from the driven element. Examples of drill string application of the torque limiting device 60 according to embodiments of the present invention may include wellbore clean-up operations, drilling stage cement collars, drilling frac-plugs, drilling out formation isolation valves, drilling cement, or drilling through a shoe track to drill a new formation.

Figure 11 illustrates a further example of an application of the torque limiting device 60 according to an embodiment of the present invention, where the torque limiting device 60 is included in a top drive 58 to prevent accidental over-torque of connections while making up connections at surface. The top drive 58 is the device that is operable to rotate the drill string. Generally, the top drive features a powerful motor used to rotate the drill string.

The top drive 58 is suspended from the drilling rig 50 and can be connected directly to the drill string and can be raised and lowered as required to raise or lower the drill string. In the illustrated example, the top drive 58 is suspended from the drilling rig 50 and includes a lower threaded connection 59. The upper mandrel of the torque limiting device 60 connects to the lower threaded connection 59 and lower mandrel will connect the torque limiting device to the drill pipe 61. Sections of the drill pipe are connected by suitable male 62 and female 63 connectors.

Further tubular elements are added to the drill string by threaded connections as the drill string is lowered into the oil well. As such the top drive 58 is used to make the threaded connections with each addition of a tubular element to the drill string. Typically, the top drive 58 is a powerful device and may not be ideally suited to use on lower strength connections as typical in smaller diameter drill strings. As such it is possible to accidentally over-torque the lower strength connections while making them up at surface. The torque limiting device 60 can be used to prevent such over-torques from occurring. The near surface location would provide a clear indication to operators that an over-torque situation had occurred. As described above, with reference to figures 7 and 8, the torque limiting device 60 is efficiently reset and therefore such over-torques situations can easily be resolved. As described above the torque limiting device includes adjustability where the degree of spring force can be adjusted and therefore for reduced cross section and reduced longitudinal forces a suitable spring force can be applied.

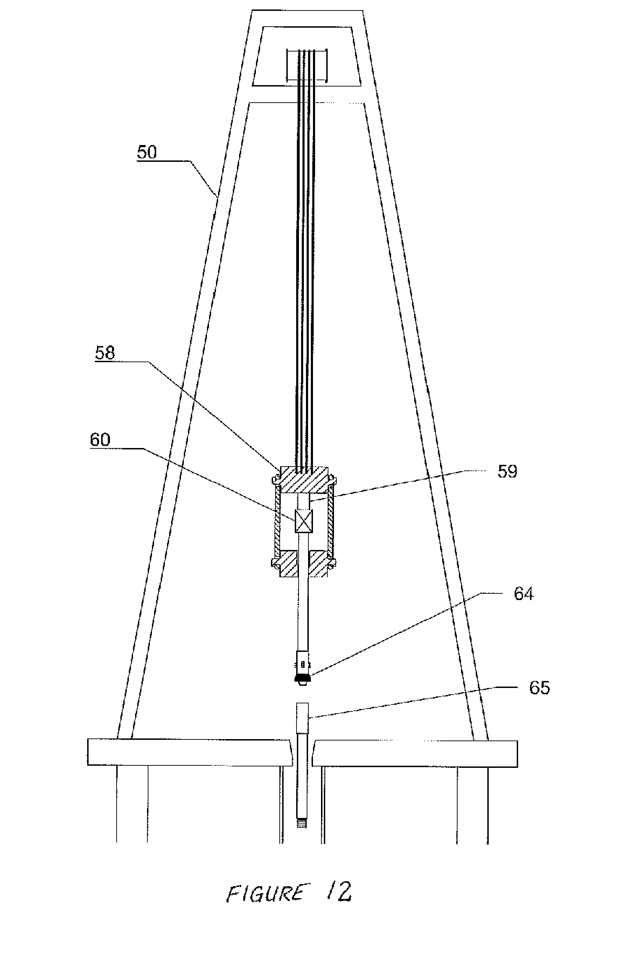

Figure 12 represents a further application of the torque limiting device 60 according to an embodiment of the present invention. The application relates to use with a top drive casing running tool or CRT 64 to run casing into the wellbore. CRT devices replace traditional methods of running casing which is generally labour intensive using hydraulically operated tongs. The CRT 64 allows the top drive 58 to make up the casing directly where the CRT 64 screws into the lower connection of the top drive 58. The CRT then stabs into the joint of casing to be run and is set by hydraulic or mechanical means to grip the casing. The powerful rotary motor in the top drive 58 then allows the casing joint to be made up and run into the wellbore. Casing connections must be torqued accurately. Typically there is a lower, optimum and maximum torque to make up the connection successfully. As described above with reference to figure 11, typically, top drive torque controls are not sensitive enough to prevent over-torque situations. It will be appreciated if a connection between two casing sections is over-torqued deformation may occur and ultimately mechanical failure may be the result.

A torque limiting device 60 according to embodiments of the present invention connected between the lower connection of the top drive 58 and the CRT tool 64 allows the maximum make-up torque to be set by adjusting the biasing force BF via nut 2 such that if the maximum torque is accidentally exceeded, the torque limiting device 60 will disengage the drive element from the driven element to prevent any damage to the casing. In this example, the near surface location provides a clear indication to operators that an over-torque situation has occurred. As described above, with reference to figures 7 and 8, the torque limiting device 60 is efficiently reset and therefore such over-torques situations can easily be resolved.

Whilst specific embodiments of the present invention have been described above, it will be appreciated that departures from the described embodiments may still fall within the scope of the present invention.

## Claims

1. A torque limiting device connectable between sections of a rotatable tubular; the torque limiting device comprising:
a first tubular element and a second tubular element, wherein the first and second tubular elements are connectable to and between respective first and second adjacent sections of the rotatable tubular;
a driven element and a drive element each in rotational communication with the first and second tubular elements respectively, wherein the driven element and the drive element are engageable with, disengageable from and re-engageable with each other and wherein upon relative rotation, when the drive element and the driven element are engaged, a longitudinal force is imparted in the direction of disengagement, the tubular being axially secured and rotationally dependent when the driven element and the drive element are engaged; and
a biasing member operable to apply a biasing force to one of the driven element and the drive element in the direction of engagement, wherein the biasing force is configurable to be greater than the longitudinal force imparted by rotation of the tubular when the driven element and drive element are engaged and wherein disengagement of the drive element from the driven element is effected when the longitudinal force exceeds a predetermined biasing force.

2. A torque limiting device as claimed in claim 1, wherein the driven element and the drive element each comprise a complementary mating surface, wherein the complementary mating surfaces are operable to engage, disengage and re-engage the drive element and the driven element relative to each other.

3. A torque limiting device as claimed in claim 2, wherein the driven element and the drive element each comprise a toothed profile comprising a plurality of teeth arranged to mesh when engaged.

4. A torque limiting device as claimed in claim 3, wherein each tooth comprises an asymmetric form having two mating faces where one mating face is angled at a steeper angle than the other face and optionally,
wherein each tooth comprises at least one sloping face at an angle of between 30 and 60 degrees, and optionally,
wherein each tooth comprises at least one sloping face at an angle of between 35 and 55 degrees and optionally,
wherein each tooth comprises at least one sloping face at an angle of between 40 and 50 degrees.

5. A torque limiting device as claimed in any preceding claim, further comprising: a bearing assembly associated with the biasing element and operable to control movement of the driven element and/or the drive element between engagement and disengagement, and optionally,
wherein the bearing assembly comprises a first ball retainer and a second ball retainer, wherein the first ball retainer and the second ball retainer each comprise complementary facing profiles which define a substantially V-shaped groove configured to receive a ball bearing, wherein the biasing element is operable to apply the biasing force to one of the first retainer or second retainer to retain the ball, and optionally,
wherein the drive element includes a shoulder section and a tapered flank disposed on one end, wherein the ball is configured to rest on the shouldered section when the drive element and driven element are engaged and disengaged and wherein the ball is configured to ride over the tapered flank in response to loading via the bearing assembly to move from engaged to disengaged and from disengaged to engaged and optionally, wherein the bearing assembly further comprises a stop arranged to limit travel of the drive element during movement from engaged to disengaged.

6. A torque limiting device as claimed in any preceding claim, further comprising an adjuster associated with the biasing element, wherein the adjuster is operable to adjust the biasing force applied by the biasing element, and optionally,
wherein the adjuster comprises a threaded fastener comprising a shoulder, which, in use, is in contact with the biasing element, wherein adjustment of the biasing force is by clockwise or counterclockwise rotation of the threaded fastener.

7. A torque limiting device as claimed in any preceding claim, wherein the biasing element comprises a resilient element and optionally,
wherein the resilient element comprises one or more springs and optionally
wherein the biasing element comprises a plurality of coned disc springs, also known as Bellville^{™} springs, arranged in a stack.

8. A torque limiting device as claimed in any preceding claim comprising the first tubular element being connectable to an upper section of a tubular device, and the second tubular element being connectable to a lower section of a tubular device; wherein the first tubular element comprises a connector for connection to the upper section of the tubular device and an elongate shaft section, wherein the shaft section comprises a threaded section to which is secured an end cap from which the lower section of the tubular device is suspended, the drive element and the driven element being mounted relative to the shaft section, wherein the shaft section includes a splined outer profile which engages with a corresponding splined profile on the driven element and a locking nut to retain the transmssion element longitudinally, the drive element being rotationally free relative to the shaft section and being rotationally dependent on an outer annular sleeve comprising a splined inner surface corresponding with a splined outer surface of the drive element, wherein the annular sleeve is rotational relative to a further bearing assembly comprising a stator and rotor such that when the driven element and the drive element are engaged the upper and lower sections are rotationally dependent and when the driven element and the drive element are disengaged the upper section is rotatable independent of the lower section.

9. A torque limiting device as claimed in claim 8, wherein the bearing assembly comprises polycrystalline diamond bearings or ball bearings or ceramic bearings.

10. A tubular device comprising a torque limiting device as claimed in any preceding claim.

11. A tubular device as claimed in claim 10 comprising a drill string and optionally comprising a top-drive, wherein the torque limiting device is located proximate the top drive.

12. A tubular device as claimed in claim 10 comprising a casing running tool.

13. A method of controlling torque transmitted between two sections of a rotatable tubular, the method comprising the steps of:
connecting a torque limiting device between two sections of a rotatable tubular, wherein a first tubular element of the torque limiting device is connected to a first section of the rotatable tubular and a second tubular element of the torque limiting device is connected to a second section of the rotatable tubular, wherein the first section of the rotational tubular is adjacent to the second section;
engaging a driven element and a drive element such that each of the drive element and the driven element are in rotational communication with the first and second tubular elements respectively, wherein upon relative rotation of the first and second tubular a longitudinal force is imparted in the direction of disengagement of the drive element and the driven element, wherein the rotatable tubular is axially secured and rotationally dependent when the driven element and the drive element are engaged; and
configuring a biasing member to apply a biasing force to one of the driven element and the drive element in the direction of engagement, wherein the biasing force is greater than the longitudinal force imparted by rotation of the tubular when the driven element and drive element are engaged and wherein disengagement of the drive element from the driven element is effected when the longitudinal force exceeds a predetermined biasing force.

14. A method as claimed in claim 13, wherein the rotatable tubular is a drill string and optionally, wherein the rotatable tubular comprises a top-drive, wherein the torque limiting device is connected proximate the top drive.

15. A method as claimed in claim 13, wherein the rotatable tubular is a casing running tool.
